# EUROPÄISCHE PATENTSCHRIFT

(11) **EP 0 874 711 B1**
(45) Veröffentlichungstag und Bekanntmachung des Hinweises auf die Patenterteilung: **19.06.2002**
(21) Anmeldenummer: 97902183.9
(22) Anmeldetag: 17.01.1997
(51) Int. Cl.: B23K 3/03

(54) **LÖTKOLBEN**
SOLDERING IRON
FER A SOUDER

(30) Priorität: 17.01.1996 DE 29600771 U
(43) Veröffentlichungstag der Anmeldung: 04.11.1998
(73) Patentinhaber: Cooper Tools GmbH, 74354 Besigheim (DE)
(72) Erfinder: KURPIELA, Gerhard, D-74336 Brackenheim (DE); STAIGER, Jürgen, D-74397 Pfaffenhofen (DE); ZERWECK, Ralf, D-74357 Bönnigheim (DE)
(74) Vertreter: Grünecker, Kinkeldey, Stockmair & Schwanhäusser Anwaltssozietät
(86) Internationale Anmeldenummer: EP9700220
(87) Internationale Veröffentlichungsnummer: WO9726108

(56) Entgegenhaltungen:
- EP-A- 0 499 734
- DE-C- 682 406
- DE-U- 8 910 049
- US-A- 2 737 570
- US-A- 3 662 152

## Beschreibung

Die Erfindung betrifft einen Lötkolben mit einem Gehäuse zur Aufnahme wenigstens einer Heizeinrichtung und mit einer im Gehäuse lösbar befestigten Lötspitze, wobei die Heizeinrichtung an einer der Lötspitze zuweisenden Stirnseite mit einer wärmeübertragenden Kontaktfläche ausgebildet ist, welcher eine Wärmeempfangsfläche der Lötspitze gegenüberliegt, wobei Kontaktflächen und Wärmeempfangsflächen insgesamt planparallel sind und in einem wärmeleitenden, im wesentlichen zwischenschichtlosen Direktkontakt stehen.

Aus der DE 682 406 C ist ein solcher Lötkolben bekannt.

Bei einem aus der Praxis bekannten Lötkolben, sind Heizeinrichtung und Lötspitze beabstandet zueinander angeordnet. Durch das auf diese Weise zwischen Heizeinrichtung und Lötspitze befindliche Luftpolster ist die Wärmeübertragung zwischen Heizeinrichtung und Lötspitze beeinträchtigt.

Bei einem weiteren aus der Praxis bekannten Lötkolben sind Heizeinrichtung und Lötspitze fest miteinander verbunden. Dadurch ist zwar die Wärmeübertragung von der Heizeinrichtung auf die Lötspitze verbessert. Allerdings ist die Lötspitze bei Abnutzung oder Beschädigung nicht separat gegen eine andere austauschbar.

Schließlich ist aus der Praxis ein Lötkolben bekannt, bei dem in der Wärmeempfangsfläche Vertiefungen oder Vorsprünge angeordnet sind. Komplementäre Vorsprünge oder Vertiefungen sind in der Kontaktfläche an der Stirnseite der Heizeinrichtung angeordnet.

Im Hinblick auf den gattungsbildenden Stand der Technik nach DE 682 406 C liegt der Erfindung die Aufgabe zugrunde, einen Lötkolben der eingangs genannten Art dahingehend zu verbessern, daß die Temperatur der Lötspitze bei gleichzeitiger Beibehaltung des optimierten Wärmeübergangs zwischen Kontaktfläche und Wärmeempfangsfläche besser kontrolliert und gesteuert werden kann.

Diese Aufgabe wird bei dem eingangs beschriebenen Lötkolben durch die zusätzlichen Merkmale des Kennzeichens des Patentanspruchs 1 gelöst.

Durch den im wesentlichen zwischenschichtlosen Direktkontakt zwischen Kontaktfläche und Wärmeempfangsfläche ist der Wärmeübergang zwischen diesen Flächen optimiert. Weiterhin ergibt sich durch die planparallele Ausbildung der Flächen eine spielfreie Kontaktanlage weitestgehend ohne wärmeisolierende Zwischenschichten. Um in diesem Zusammenhang ohne Änderung von Wärmeempfangsfläche und Kontaktfläche und ohne Verzicht auf die dadurch gegebenen Vorteile die Temperatur in der Lötspitze und insbesondere am Lötpunkt kontrollieren und steuern zu können, ist ein Temperatursensor benachbart zur Kontaktfläche und zwischen dieser und einer Heizwicklung eines Heizkörpers angeordnet. Durch die Anordnung benachbart zur Kontaktfläche wird im wesentlichen die Temperatur der Kontaktfläche und damit die Temperatur der Lötspitze bestimmt, die sich durch die an die Wärmeempfangsfläche abgegebene Wärme ergibt. Da der Temperatursensor weiterhin zwischen der Kontaktfläche und der Heizwicklung eines Heizkörpers angeordnet ist, wird nicht die direkt durch die von der Heizwicklung abgegebene Wärme bestimmte Temperatur, sondern eine sich nur durch den Wärmefluß in Richtung Lötspitze ergebene Temperatur gemessen. Diese entspricht relativ genau der Temperatur der Lötspitze aufgrund der guten Wärmeübertragung zwischen den vorgenannten Flächen. Statt dessen würde bei einer Anordnung des Temperatursensors beispielsweise innerhalb der Heizwicklung eine im Vergleich zur Temperatur der Lötspitze in der Regel zu hohe Temperatur gemessen.

Die Herstellung von Lötspitzen-Spitzenhalterung wird weiterhin dadurch vereinfacht, daß diese und damit Kontaktfläche und Wärmeempfangsfläche achsensymmetrisch zur Längsachse von Lötspitze, bzw. Spitzenhalterung ausgebildet sind.

Um Lötspitze und Spitzenhalterung einfach zueinander ausrichten zu können, während die Lötspitze mittels der Spitzenhalterung am Lötkolben befestigt wird, können Kontaktfläche und Wärmeempfangsfläche relativ zueinander verdrehbar sein. Durch die Verdrehbarkeit im Zusammenhang mit der planparallelen Ausbildung von Kontaktfläche und Wärmeempfangsfläche und dem Direktkontakt zwischen diesen ist es weiterhin ermöglicht, daß beispielsweise ein Luftpolster zwischen den Flächen verbessert verdrängt wird.

Kontaktfläche und Wärmeempfangsfläche können verschiedene Umrisse aufweisen. Diese können eckig oder oval sein. Bevorzugt aufgrund der vereinfachten relativen Verdrehbarkeit und Herstellung sind kreisförmige Flächen für Kontakt- und Wärmeempfangsfläche. In diesem Zusammenhang erweist es sich weiterhin als günstig, wenn beide kreisförmigen Flächen gleichen Radius aufweisen. In diesem Fall stehen die Flächen in vollem Direktkontakt, ohne daß eine Fläche die andere nach außen hin überragt.

Bei einer Galvanisierung der Lötspitze kann insbesondere auf der in der Regel radial relativ zur übrigen Lötspitze nach außen überstehende Wärmeempfangsfläche in deren Randbereichen das galvanisch aufgetragene Material eine etwas größere Materialstärke als beabstandet zum Randbereich aufweisen. Um auch in einem solchen Fall einen im wesentlichen zwischenschichtlosen Direktkontakt zwischen Kontaktfläche und Wärmeempfangsfläche sicherzustellen, kann die Wärmeempfangsfläche größer als die Kontaktfläche ausgebildet sein. Auf diese Weise steht die Kontaktfläche mit der Wärmeempfangsfläche nur innerhalb des Randbereichs mit dieser in Direktkontakt. Auf diese Weise kann eine Nachbehandlung der Wärmeempfangsfläche nach der Galvanisierung vermieden werden. Erfolgt allerdings eine solche Nachbehandlung, beispielsweise durch Planschleifen oder dergleichen, kann die Wärmeempfangsfläche natürlich auch gleich groß zur Kontaktfläche sein.

Bei einem einfachen Ausführungsbeispiel kann die Heizeinrichtung ein elektrisch erwärmbarer Heizkörper sein, dessen der Lötspitze zuweisende Stirnseite direkt die Kontaktfläche sein kann.

Um den Wärmeübergang zwischen Heizeinrichtung und Lötspitze zu optimieren, kann zumindest die Kontaktfläche von Heizeinrichtung, beziehungsweise Heizkörper aus einem Material zur Optimierung des Wärmeübergangs gebildet sein, das heißt aus einem Material mit hoher Wärmeleitzahl. Solche Materialien sind beispielsweise Kupfer, Silber oder dergleichen.

Um den Wärmeübergang von der Heizeinrichtung auf die Kontaktfläche zu beschleunigen und zu optimieren, kann der Heizkörper mit seinem der Lötspitze zuweisenden Endabschnitt in einer Hülse aus einem Material mit hoher Wärmeleitzahl eingesteckt sein. In diesem Fall ist die Kontaktfläche an einer der Lötspitze zuweisenden Stirnseite der Hülse gebildet, Die Wärmeübertragung vom Heizkörper auf die Kontaktfläche durch die Hülse beschleunigt und optimiert

Das Gehäuse des Lötkolbens kann mehrteilig ausgebildet sein, wobei beispielsweise in einem Handgriffabschnitt eine entsprechende Steuerelektronik zur Regelung der Temperatur der Lötspitze untergebracht sein kann. Der Handgriffabschnitt weist eine Isolierung auf, die ein Halten des Lötkolbens ermöglicht. Dabei verhindert die Isolierung einen Wärmeübergang von der Heizeinrichtung auf die Außenseite des Handgriffabschnitts.

In diesem Zusammenhang ist es von Vorteil, wenn zur Vereinfachung des Aufbaus des Lötkolbens, das Gehäuse eine lösbar am übrigen Gehäuse befestigte Spitzenhalterung umfaßt. Diese drückt in ihrer Befestigungsstellung Kontaktfläche und Wärmeempfangsfläche fest aneinander, so daß der zwischenschichtlose Direktkontakt hergestellt wird. Vorteilhafterweise ist die Spitzenhalterung hülsenförmig als Spitzenhülse ausgebildet, in der der Heizkörper oder die Heizeinrichtung zumindest mit seinem beziehungsweise ihrem Endabschnitt angeordnet ist, wobei am freien Ende der Spitzenhülse die Lötspitze lösbar befestigt ist.

Um bei Befestigung der Spitzenhalterung am übrigen Gehäuse in einfacher Weise gleichzeitig die Wärmeempfangsfläche der Lötspitze und die komplementäre Kontaktfläche in Direktkontakt zu bringen und die Lötspitze am Lötkolben zu befestigen, weist die Spitzenhülse an ihrem freien Ende eine Öffnung zum Hervorstehen der Lötspitze auf, wobei die Lötspitze an ihrem der Heizeinrichtung zuweisenden Ende einen zumindest teilweisen umlaufenden Kragen aufweist, der einen Öffnungsrand der Öffnung unter- beziehungsweise hintergreift. Dadurch ist die Lötspitze in einfacher Weise vom Inneren der Spitzenhalterung her durch die Öffnung hindurchsteckbar, bis sie mit ihrem Kragen mit dem Öffnungsrand in Anlage gerät. Durch Aufschrauben oder sonstiges Befestigen der Spitzenhalterung am übrigen Gehäuse des Lötkolbens wird anschließend die Wärmeempfangsfläche der Lötspitze an die Kontaktfläche der Heizeinrichtung angedrückt, so daß diese in Direktkontakt stehen.

Bezüglich des Direktkontakts von Wärmeempfangsfläche und Kontaktfläche sei weiterhin angemerkt, daß zugehörige Flächennormalen dieser beiden Flächen parallel oder geneigt zur Längsachse der Lötspitze oder des Lötkolbens verlaufen können. Eine relative Drehung der beiden Flächen zueinander ist bei paralleler Anordnung zu den Längsachsen gegeben.

Der Direktkontakt von den beiden Flächen und gleichzeitig ein wackelfreies Halten der Lötspitze in der Spitzenhalterung wird dadurch unterstützt, daß Öffnungsrand und Kragen spielfrei aneinander anliegen, wobei diese einander zuweisende und miteinander in Anlage stehende Anlageschrägen aufweisen können.

Ausreichend ist in diesem Zusammenhang, wenn der Öffnungsrand radial einwärts in Richtung Längsachse verläuft und beispielsweise nur der Kragen eine entsprechende Anlageschräge aufweist. Durch das Zusammenspiel von Öffnungsrand und Anlageschräge erfolgt gleichzeitig eine Zentrierung der Lötspitze und eine wakkelfreie Halterung.

In diesem Zusammenhang kann auch auf schrägverlaufende Anlageschrägen verzichtet werden und Öffnungsrand und entsprechende Anlagefläche des Kragens können sich im wesentlichen senkrecht zur Längsachse von Lötspitze oder Spitzenhalterung erstrecken.

Um beim Lösen der Spitzenhalterung ein gleichzeitiges Lösen der Lötspitze von der Spitzenhalterung zu verhindern, kann ein Rückhaltevorsprung zumindest stellenweise im wesentlichen radial nach außen von der Lötspitze und beabstandet vom Kragen abstehen. Dieser Rückhaltevorsprung kann beim Lösen der Spitzenhalterung mit dem entsprechenden Öffnungsrand in Kontakt kommen und ein vorzeitiges Hineinfallen der Lötspitze in die Spitzenhalterung verhindern. Auf diese Weise kann die Spitzenhalterung zusammen mit der Lötspitze vom übrigen Lötkolben gelöst werden.

Bei einem einfachen Ausführungsbeispiel kann der Rückhaltevorsprung als die Lötspitze umlaufende Ringwulst ausgebildet sein. Diese weist zumindest eine dem Innendurchmesser der Öffnung der Spitzenhalterung entsprechenden Außendurchmesser auf. Selbst wenn dieser Außendurchmesser geringfügig größer als der Innendurchmesser der Öffnung ist, kann bei abgenommener Spitzenhalterung die Lötspitze durch nur geringen Kraftaufwand in das Innere der Spitzenhalterung gedrückt werden und so von dieser gelöst werden.

Dabei erweist es sich weiterhin als Vorteil, wenn zwischen Rückhaltevorsprung und Kragen eine Nut zur zumindest teilweisen Aufnahme des Öffnungsrandes ausgebildet ist. Die Nut kann sich auch als Ringnut entlang des gesamten Umfangs der Lötspitze erstrecken.

Die vorangehend erwähnte Nut kann beispielsweise auch während der Galvanisierung zum Halten der Lötspitze verwendet werden. Dabei kann die Nut sowohl bei Lötspitze mit als auch ohne Rückhaltevorsprung in Richtung Vorderende der Lötspitze beabstandet zum Kragen in der Lötspitze oder auch direkt anschließend an den Kragen ausgebildet sein. In jedem Fall dient die Nut dazu, daß der Öffnungsrand der Spitzenhalterung wenigstens stellenweise oder teilweise in die Nut eingreift. Dadurch kann die Lötspitze auch bei vom übrigen Lötkolben gelöster Spitzenhalterung von dieser mittels des Eingriffs von Öffnungsrand und Nut gehalten werden. Selbstverständlich kann die Nut als die Lötspitze insgesamt umlaufende Umfangsnut ausgebildet sein, wobei der Öffnungsrand entlang der gesamten Umfangsnut in diese eingreifen kann. Zumindest kann die Nut in vorteilhafter Weise auf gegenüberliegenden Seiten der Lötspitze angeordnet sein, wobei der Öffnungsrand entsprechend an diesen Stellen in die Nut eingreift.

In diesem Zusammenhang kann es sich weiterhin als günstig erweisen, wenn Lötspitze und/oder Spitzenhalterung zumindest im Bereich von Nut und/oder Öffnungsrand einen im wesentlichen ovalen oder elliptischen Querschnitt aufweisen. Auf diese Weise können Nut und Öffnungsrand durch geringen Druck ineinander einrasten. Beim Lötspitzenwechsel kann die Lötspitze nicht ungewollt aus der Spitzenhalterung herausfallen. Statt dessen kann die Spitzenhalterung mit eingerasteter Lötspitze abgelegt werden und durch eine andere Spitzenhalterung mit entsprechender Lötspitze ersetzt werden. Weiterhin können abgenützte oder beschädigte Lötspitzen durch leichtes Drücken aus dem Eingriff mit dem Öffnungsrand und damit aus der Spitzenhalterung entfernt werden.

Der in die Nut eingreifende Öffnungsrand und die Nut können zueinander komplementär ausgebildet sein, um ein formschlüssiges Eingreifen zu ermöglichen. Weiterhin kann es sich als vorteilhaft erweisen, wenn der Öffnungsrand mit einem gewissen Spiel in die Nut eingreift, wobei die Nut relativ zum eingreifenden Öffnungsrand einen größeren Querschnitt aufweist. Außerdem kann die Nut einen zur radialen Richtung asymmetrischen Querschnitt aufweisen. Dieser kann beispielsweise so ausgebildet sein, daß die Nut auf ihrer der Wärmeempfangsfläche zuweisenden Seite eine Anlagefläche für den Öffnungsrand aufweist. Diese kann allein oder auch in Zusammenwirkung mit einer Anlagefläche des Kragens zum Befestigen der Lötspitze mittels der Spitzenhalterung dienen. Dabei kann die Nut auch so angeordnet sein, das heißt, im wesentlichen ohne Abstand zum Kragen, daß die Anlageschräge oder -fläche des Kragens sich bis in die Nut erstreckt. Außerdem kann bei Fehlen eines Kragens die Lötspitze auch nur durch Eingriff des Öffnungsrandes in die Nut durch die Spitzenhalterung gehalten und an der Heizeinrichtung befestigt werden.

Um die elastischen Eigenschaften der Spitzenhalterung im Bereich der Öffnung zu beeinflussen, kann es sich als Vorteil erweisen, wenn beabstandet zur Öffnung der Spitzenhalterung in dieser eine im wesentlichen senkrecht zur Längsachse verlaufende Kerbe ausgebildet ist. Diese kann im Querschnitt U- oder V-förmig sein. Die Kerbe kann auf der Innenseite oder der Außenseite der Spitzenhalterung ausgebildet sein, wodurch sich auf der Außenseite der Spitzenhalterung entsprechend eine Erhöhung oder Vertiefung bildet. Weiterhin kann die Kerbe einen asymmetrischen Querschnitt aufweisen, das heißt, die entsprechenden U- oder V-Schenkel sind unter unterschiedlichen Winkeln zu einer Radialrichtung der Spitzenhalterung geneigt.

Um die Elastizität des Öffnungsrandes zu erhöhen, ist die Kerbe vorzugsweise als in Richtung Längsachse nach innen versetzte Vertiefungskerbe ausgebildet.

Um in diesem Zusammenhang gleiche elastische Eigenschaften symmetrisch zur Längsachse zu erhalten, kann die Vertiefungskerbe als die Spitzenhülse umlaufende Umfangskerbe ausgebildet sein. Beim Befestigen der Spitzenhalterung am übrigen Lötkolben ergibt sich somit für das oberhalb der Kerbe angeordnete Ende der Spitzenhalterung und insbesondere deren Öffnungsrand eine verbesserte Elastizität zum vollflächigen Andrücken der Wärmeempfangsfläche der Lötspitze an die Kontaktfläche.

Die Wirkung der Kerbe wird unterstützt, wenn der Abstand der Kerbe von der Öffnung zumindest gleich dem Abstand zwischen Kontaktfläche und Öffnung ist. Dies gilt für am Lötkolben befestigte Spitzenhalterung.

Um bei der Befestigung der Spitzenhalterung am übrigen Lötkolben die relative Verdrehbarkeit von Wärmeempfangsfläche und Kontaktfläche ausnutzen zu können, ist es insbesondere von Vorteil, wenn ein Reibschluß zwischen Öffnungsrand und Kragen größer als zwischen Kontaktfläche und Wärmeempfangsfläche ist. Auf diese Weise wird die Lötspitze zusammen mit der Spitzenhalterung bei deren Befestigung am Lötkolben bewegt und Kontaktfläche und Wärmeempfangsfläche werden relativ zueinander so lange verdreht, bis ein inniger Direktkontakt zwischen beiden hergestellt ist. Dabei kann gleichzeitig ein gewisses Glattschleifen dieser Flächen durch deren relative Verdrehung stattfinden, wodurch eventuell vorhandene Oberflächenrauhigkeiten eingeschliffen werden.

Zur einfachen Regelung der Temperatur ist eine Zuordnung eines Temperatursensors zur Heizeinrichtung und/oder zur Lötspitze von Vorteil. Ist ein solcher Temperatursensor sowohl der Heizeinrichtung als auch der Lötspitze zugeordnet, kann gleichzeitig über eine entsprechende Elektronik der Temperaturgradient entlang der Lötkolbenlängsachse zur optimalen Benutzbarkeit des Lötkolbens eingestellt werden.

Um Spitzenhalterung und Lötspitze schnell am übrigen Lötkolben befestigen oder von diesem lösen zu können, kann zwischen Spitzenhalterung und einem Griffabschnitt des Gehäuses ein Schnellwechselsystem ausgebildet sein. Durch das Schnellwechselsystem insbesondere für die Lötspitze ist diese als Verschleißteil einfach austauschbar, wobei bei möglichst kleiner Spitze und deren getrennte Ausbildung von der Heizeinrichtung, das Verschleißteil minimiert ist.

Für das Schnellwechselsystem sind verschiedene Realisierungen einsetzbar.

Beispielsweise kann das Schnellwechselsystem einen Gewindeflansch am Griffabschnitt und eine an der Spitzenhalterung drehbar gelagerte Rändelmutter aufweisen. Bei einem weiteren Ausführungsbeispiel des Schnellwechselsystems ist ein Flansch mit schräger Nut am Griffabschnitt und wenigstens ein entlang der Nut führbarer Bolzen in der Spitzenhalterung angeordnet. Ein solcher Bolzen kann von der Innenseite eines an einem Ende der Spitzenhalterung drehbar gelagerten Ringes abstehen.

Weiterhin kann das Schnellwechselsystem einen Gewindeflansch am Griffabschnitt und ein Klappgewinde an der Spitzenhalterung aufweisen. Ein solches Klappgewinde kann zweiteilig ausgebildet sein, wobei es in Richtung Aufklappstellung federbeaufschlagt ist.

Die dabei zum Verschrauben der verschiedenen Teile des Schnellwechselsystems verwendeten Gewinde können als Feingewinde, Steilgewinde oder Mehrgangsgewinde ausgebildet sein. Das Gewinde kann auch als mehrgängiges Steilgewinde zum schnellen Lösen ausgebildet sein, wobei dieses einen kurzen Drehwinkel und eine Selbsthemmung aufweisen kann.

Entsprechende weitere Schnellwechselsysteme weisen eine Hakenmutter an der Spitzenhalterung und eine schräg verlaufende Klemmnut im Griffabschnitt oder ein Rastelement an der Spitzenhalterung und ein Gegenrastelement am Griffabschnitt auf. Dabei kann das Rastelement als Verzahnung und das Gegenrastelement als Rastschieber ausgebildet sein.

Weitere Ausbildungen des Schnellwechselsystems sind offensichtlich.

Bei den verschiedenen Schnellwechselsystemen kann es sich weiterhin als Vorteil erweisen, wenn die Spitzenhalterung oder Spitzenhülse zumindest im Bereich ihres freien Endes einseitig auf ihrer Außenseite offen ist.

Um die Lötspitze insbesondere bei kleinen zu lötenden Gegenständen oder feinen Arbeiten sicher halten zu können, ist von Vorteil, wenn der Lötkolben möglichst nahe zur Lötspitze gehalten werden kann. Dies ist dadurch erreichbar, daß eine in Richtung Lötspitze konisch erweiterte Grifftulpe vom Griffabschnitt absteht und die Spitzenhalterung zumindest teilweise umgibt. Durch die Grifftulpe ist im wesentlichen der Griffabschnitt in Richtung Lötspitze verlängert.

In diesem Zusammenhang kann sich ein vorteilhaftes Ausführungsbeispiel dadurch ergeben, daß die Grifftulpe an der Spitzenhalterung gelagert ist und zwischen ihrem dem Griffabschnitt zuweisenden Ende und dem Griffabschnitt das Schnellwechselsystem ausgebildet ist. Dabei kann die Grifftulpe beispielsweise entsprechend zur oben erwähnten Hakenmutter, Rändelmutter oder dergleichen drehbar an der Spitzenhalterung gelagert sein. Allerdings ist in diesem Zusammenhang zu beachten, daß der Reibschluß zwischen Grifftulpe wie auch den übrigen Schnellwechselsystemen und Spitzenhalterung zumindest so groß ist, daß die Spitzenhalterung vor ihrer endgültigen Befestigung am Griffabschnitt mit gedreht wird und so die oben erwähnte Relativdrehung zwischen Kontaktfläche und Wärmeempfangsfläche stattfindet. Dabei kann der entsprechende Teil des Schnellwechselsystems an der Spitzenhalterung auch drehfest mit dieser verbunden sein.

Um einen elektrisch heizbaren Heizkörper in einfacher Weise zu realisieren, kann dieser eine insbesondere auf einen Wickelträger aufgewickelte Heizwicklung enthalten. Der Wickelträger kann dabei aus einem Keramikmaterial hergestellt sein. Weiterhin kann auch der Heizkörper an sich aus Keramik sein und ein Temperatursensor kann im Heizkörper keramisiert sein.

Um ein Verzundern oder Anbacken von Kontaktfläche und Wärmeempfangsfläche bei Einsatz des Lötkolbens zu verhindern, weisen Wärmeempfangsfläche und/oder Kontaktfläche eine metallische Sperrschicht, insbesondere aus Chrom oder Nickel, auf. Die Spitze kann vorzugsweise aus Kupfer hergestellt sein. Der Heizkörper oder zumindest dessen Stirnseite können aus Silber gebildet sein, wobei die metallische Sperrschicht ein Zusammenbacken dieser Materialien verhindert.

Im folgenden wird die Erfindung anhand der in der Zeichnung beigefügten Figuren näher beschrieben und erläutert.

Es zeigen:
- Figur 1: eine Seitenansicht eine vorderen Endes eines Lötkolbens in teilweise geschnittener Darstellung;
- Figur 2: einen Lötkolben mit teilweise geschnittener Spitzenhalterung und Schnellwechselsystem;
- Figur 3: eine vergrößerte Darstellung einer Heizeinrichtung nach Figur 2;
- Figur 4: einen Lötkolben mit teilweise geschnittener Spitzenhalterung und Schnellwechselsystem analog zum Lötkolben nach Figur 2 mit einer anderen Heizeinrichtung;
- Figur 5: eine vergrößerte Darstellung der Heizeinrichtung nach Figur 4;
- Figur 6: einen Lötkolben mit Grifftulpe;
- Figur 7: eine vergrößerte Darstellung eines zweiten Ausführungsbeispiels zur Befestigung einer Lötspitze;
- Figur 8: eine vergrößerte Darstellung eines dritten Ausführungsbeispiels zur Befestigung einer Lötspitze;
- Figur 9: eine vergrößerte Darstellung eines vierten Ausführungsbeispiels zur Befestigung einer Lötspitze;
- Figur 10: eine Seitenansicht eines vorderen Endes eines Lötkolbens mit einem zweiten Ausführungsbeispiel für ein Schnellwechselsystem in teilweise geschnittener Darstellung;
- Figur 11: eine Seitenansicht eines vorderen Endes eines Lötkolbens mit einem dritten Ausführungsbeispiel eines Schnellwechsel-systems in teilweise geschnittener Darstellung;
- Figur 12: eine Seitenansicht eines vorderen Endes eines Lötkolbens mit einem vierten Ausführungsbeispiel für ein Schnellwechsel-system in teilweise geschnittener Darstellung;
- Figur 13: eine Vorderansicht eines weiteren Ausführungsbeispiels für eine Spitzenhalterung;
- Figur 14: eine Seitenansicht eines vorderen Endes eines Lötkolbens mit einer Spitzenhalterung nach Figur 13 in teilweise geschnittener Darstellung;
- Figur 15: eine Seitenansicht eines vorderen Endes eines Lötkolbens mit einem fünften Ausführungsbeispiel eines Schnellwechsel-systems in teilweise geschnittener Darstellung;
- Figur 16: eine Darstellung entsprechend zu Figur 15 mit dem Schnellwechselsystem in Befestigungsstellung;
- Figur 17: eine Seitenansicht eines vorderen Endes eines Lötkolbens mit einem sechsten Ausführungsbeispiel für ein Schnellwechsel-system in teilweise geschnittener Darstellung,
- Figur 18: eine Seitenansicht eines vorderen Endes eines Lötkolbens mit einem siebten Ausführungsbeispiel für ein Schnellwechsel-system in teilweise geschnittener Darstellung;
- Figur 19: eine vergrößerte Darstellung eines fünften Ausführungsbeispiels zur Befestigung einer Lötspitze ähnlich wie in den Figuren 7 bis 9;
- Figur 20: eine Vorderansicht des Lötkolbens nach dem Ausführungsbeispiel der Figur 19, und
- Figur 21: eine der Figur 20 entsprechende Vorderansicht ohne Lötspitze.

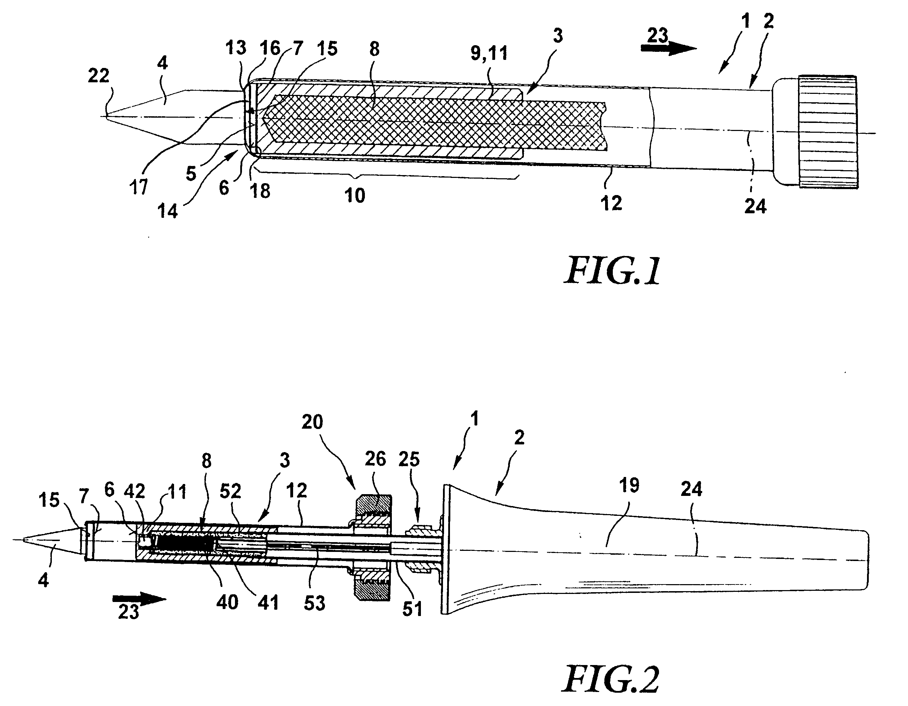

In Figur 1 ist ein Vorderende eines Lötkolbens 1 dargestellt. Dieser weist ein Gehäuse 2 auf, das nur teilweise dargestellt ist. Beispielsweise ist ein Handgriffabschnitt 19 siehe beispielsweise Figur 2, zum Halten des Lötkolbens nicht abgebildet.

Das Gehäuse 2 umfaßt eine Spitzenhalterung oder -hülse 12, die mit ihrem einer Lötspitze 4 gegenüberliegenden Ende am übrigen Gehäuse, wie beispielsweise dem Handgriffabschnitt aufschraubbar oder in anderer Weise befestigbar ist.

Die Spitzenhülse 12 ist im wesentlichen hohlzylinderförmig, wobei in ihrem Inneren eine Heizeinrichtung 3 angeordnet ist. Diese ist aus einem elektrisch beheizbaren Heizkörper 8 und einer zumindest auf einen Endabschnitt 10 dieses Heizkörpers 8 aufgesteckten Hülse 11 aus einem Material 9 mit hohem Wärme-übergangskoeffizienten gebildet. Der Heizkörper 8 kann mit seinem Endabschnitt 10 das Innere der Hülse il vollständig ausfüllen. Zumindest ist der Heizkörper 8 mit seinem der Lötspitze 4 zuweisenden Ende in rückseitige Anlage mit einer Kontaktfläche 6 der Hülse 11, die an deren der Lötspitze 4 zuweisenden Stirnseite ausgebildet ist.

In Figur 1 ist ein Luftspalt zwischen einer Wärmeempfangsfläche 7 der Lötspitze 4 und der Kontaktfläche 6 der Hülse 11 dargestellt. Dies dient zur vereinfachten Beschreibung der entsprechenden Flächen, wobei Kontaktfläche 6 und Wärmeempfangsfläche 7 bei in Befestigungsrichtung 23 zu deren vollständiger Befestigung am übrigen Gehäuse gegenüber der Heizeinrichtung 3 verschobener Spitzenhülse 12 in einem wärmeleitenden, zwischenschichtlosen Direktkontakt stehen.

Kontaktfläche 6 und Wärmeempfangsfläche 7 sind planparallel zueinander und senkrecht zur Längsachse 24 angeordnet. Bei dem dargestellten Ausführungsbeispiel sind die Flächen kreisförmig und weisen gleichen Radius auf.

Die Spitzenhülse 12 weist an ihrem freien Ende 14 eine Öffnung 13 auf, aus der die Lötspitze 4 vorsteht. Die Öffnung 13 ist von einem in Richtung Lötkolbenlängsachse oder Lötspitzenlängsachse 24 umgebogenen Öffnungsrand 16 umgeben. Dieser ist von einem die Wärmeempfangsfläche 7 zumindest teilweise umgebenden Kragen 15 hinter- beziehungsweise untergriffen. Am gegenüberliegenden Vorderende 22 der Lötspitze 4 läuft diese spitz zu.

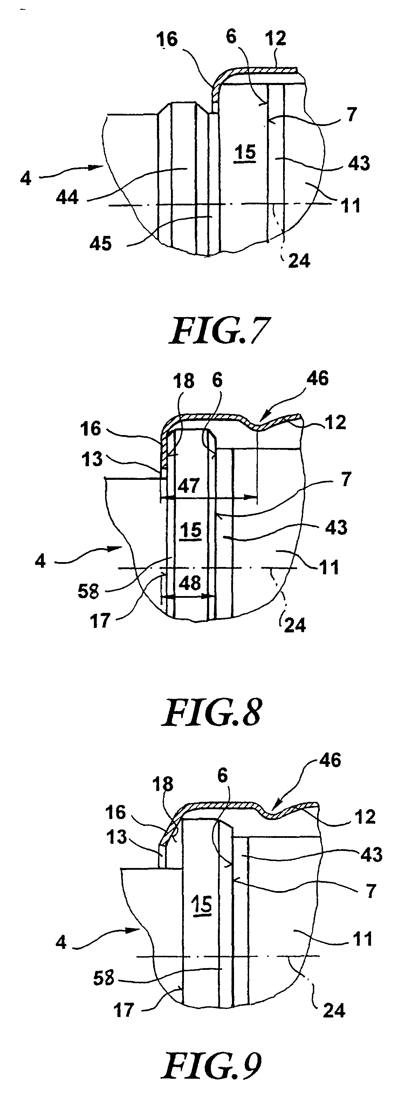

Zwischen dem Kragen 15 und der übrigen Lötspitze 4 ist eine schräg nach innen zur Längsachse 24 verlaufende Anlageschräge 17 gebildet, die mit einer entsprechenden Anlageschräge 18 auf der Innenseite des Öffnungsrandes 16 in Anlage ist, siehe beispielsweise auch Figuren 7 bis 9.

In Figur 2 ist ein Lötkolben 1 mit Gehäuse 2 in teilweise geschnittener Seitenansicht dargestellt. Das Gehäuse 2 umfaßt einen einen an sich bekannten Griffabschnitt 19, an dessen der Lötspitze 4 zuweisendem Ende ein Gewindeflansch 25 befestigt ist, der mit einer Rändelmutter 26 an der Spitzenhalterung 12 ein Schnellwechselsystem 20 bildet. Ein weiterer Teil des Gehäuses 2 wird durch die Spitzenhalterung 12 gebildet, die die Heizeinrichtung 3 enthält. Die Heizeinrichtung 3 umfaßt ein Heizkörperanschlußrohr 51, das den Gewindeflansch 25 durchsetzt und sich in den Griffabschnitt 19 erstreckt. In dem Heizkörperanschlußrohr 51 verlaufen elektrische Versorgungsleitungen 53 sowohl für den elektrisch beheizbaren Heizkörper 8 als auch für einen Temperatursensor 42, der benachbart zur Kontaktfläche 6 in der Heizkörperhülse 11 angeordnet ist.

Der Heizkörper 8 ist durch eine Heizwicklung 40 gebildet, die auf einem keramischen Wicklungsträger 41 aufgewickelt ist. Heizwicklung, Wickelträger und Temperatursensor sind innerhalb der Hülse 11 von einem Keramikmaterial 52 umgeben.

Bei dem dargestellten Ausführungsbeispiel sind Wärmeempfangsfläche 7 und Kontaktfläche 6 beabstandet voneinander angeordnet, da die Spitzenhalterung 12 noch nicht mittels des Schnellwechselsystems 20 am Griffabschnitt 19 befestigt ist.

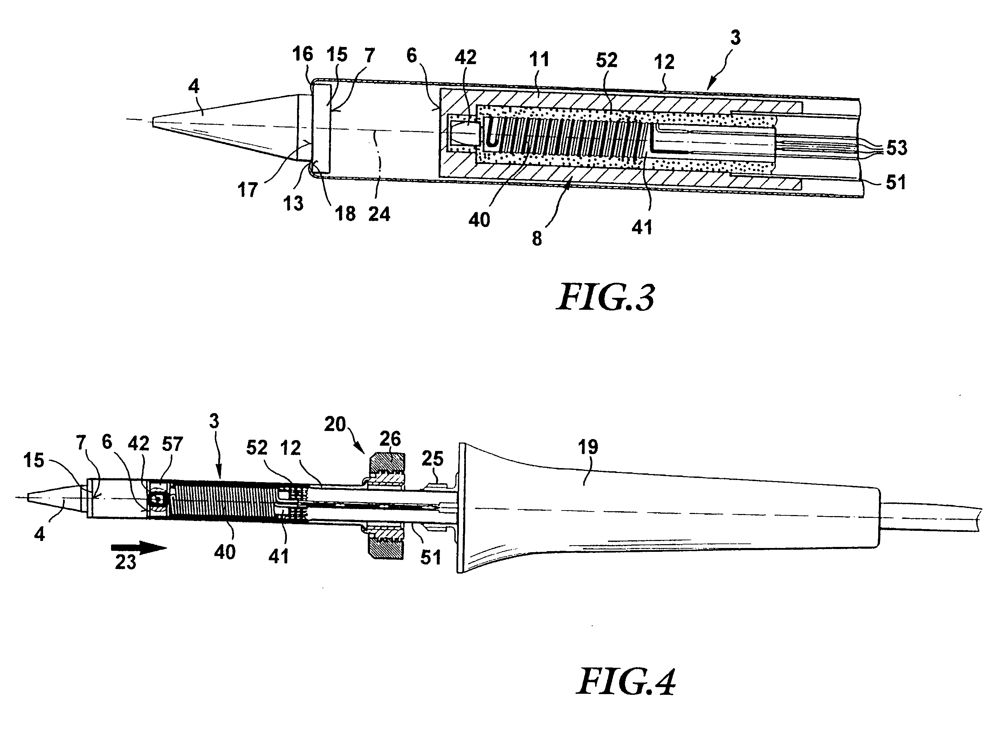

Figur 3 zeigt eine vergrößerte Darstellung der Heizeinrichtung 3 nach Figur 2. Gleiche Teile sind mit gleichen Bezugszeichen versehen und werden nur noch teilweise erwähnt.

Das Heizkörperanschlußrohr 51 endet in der Heizkörperhülse 11 beabstandet von der Heizwicklung 40. Zumindest in seinem Endabschnitt ist das Heizkörperanschlußrohr noch mit Keramikmaterial 52 gefüllt.

Im Gegensatz zum Ausführungsbeispiel nach Figur 1 sind bei Figur 3 die Anlageschrägen 17 und 18 senkrecht zur Längsachse 24 ausgebildet und erstrecken sich radial nach innen zur Längsachse.

Figur 4 zeigt ein weiteres Ausführungsbeispiel einer Heizeinrichtung 3. In diesem Fall ist der Wicklungsträger 41 für die Heizwicklung 40 auch in Richtung Griffabschnitt 19 von Keramikmaterial 52 umgeben. Ansonsten wird auf die Beschreibung bezüglich Figuren 2 und 3 verwiesen.

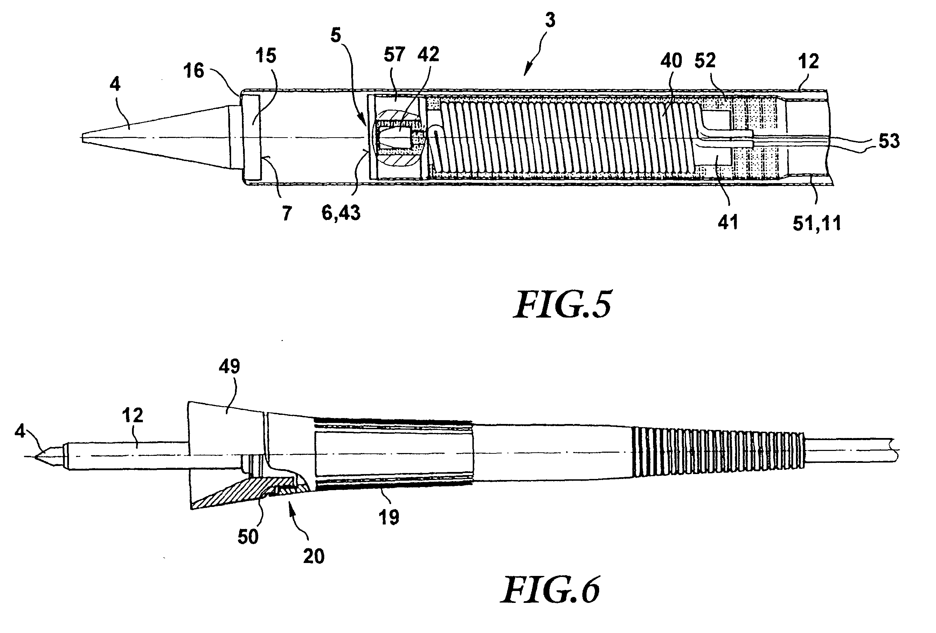

Figur 5 zeigt eine vergrößerte Darstellung der Heizeinrichtung 3 nach Figur 4. Gleiche Teile sind wiederum mit gleichen Bezugszeichen versehen.

Bei diesem Ausführungsbeispiel erstreckt sich das Heizkörperanschlußrohr 51 bis zum Temperatursensor 42 und bildet eine Heizkörperhülse 11, die an ihrem der Lötspitze 4 zuweisenden Ende offen ist. In diesem Ende ist ein dem Temperatursensor 42 umgebender Wärmeübertragungskörper 57 angeordnet, der einteilig mit dem Wickelträger 41 aus Keramik gebildet ist. Der Wärmeübertragungskörper 57 weist an seiner der Lötspitze 4 zuweisenden Stirnseite 5 die Kontaktfläche 6 auf. Diese kann direkt durch die Stirnseite des Körpers 57 oder durch eine auf der Stirnseite 5 dieses Körpers 57 aufgetragene Sperrschicht 43 gebildet werden.

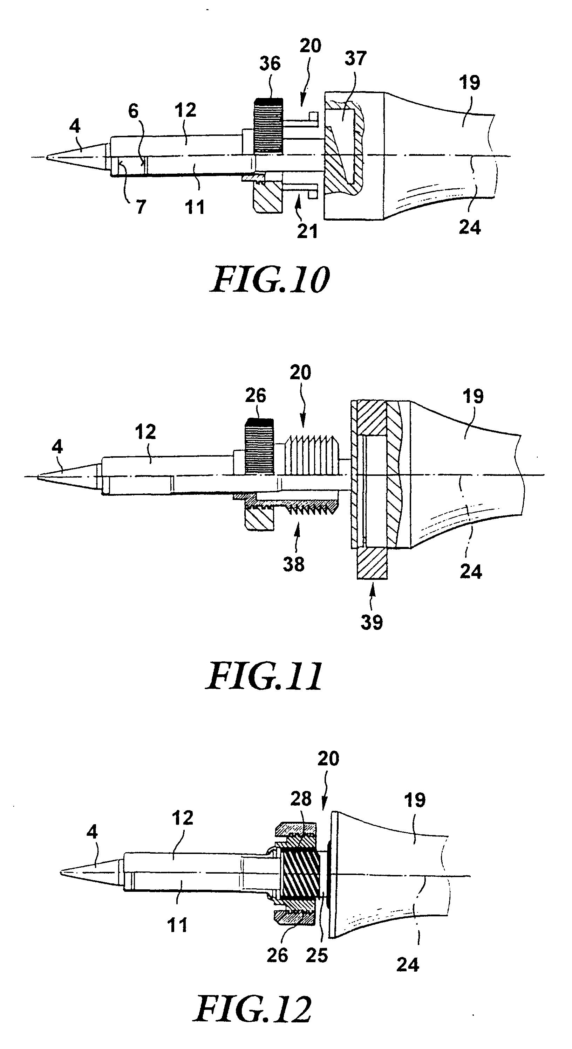

Figur 6 zeigt ein weiteres Ausführungsbeispiel des Lötkolbens mit am der Lötspitze 4 oder der Spitzenhalterung 12 zuweisenden Ende des Griffabschnitts 19 angeordneter Grifftulpe 49. Diese erstreckt sich vom Griffabschnitt 19 in Richtung Lötspitze 4 und ist konisch nach außen erweitert. Die Grifftulpe kann einteilig mit dem Griffabschnitt ausgebildet sein oder, wie beim dargestellten Ausführungsbeispiel, an ihrem dem Griffabschnitt 19 zuweisenden Ende 15 über ein Schnellwechselsystem 20 mit dem Griffabschnitt 19 verbunden sein. Bezüglich der verschiedenen Ausführungsbeispiele für Schnellwechselsysteme 20 wird in diesem Zusammenhang auf die vorangehenden Ausführungsbeispiele des Lötkolbens und auf die Erläuterungen zu Figuren 10 ff. verwiesen.

In den Figuren 7, 8 und 9 sind verschiedene Ausführungsbeispiele zur Halterung einer Lötspitze 4 in der Spitzenhalterung 12 dargestellt.

Bei Figur 7 weist die Lötspitze 4 beabstandet zum Kragen 15 einen Rückhaltevorsprung 44 auf. Dieser ist als umlaufende Ringwulst ausgebildet, die über schräg nach innen zur Längsachse 44 verlaufende Kanten in die Lötspitze übergeht. Zwischen Ringwulst 44 und Kragen 15 ist eine Nut 45 angeordnet, in die zumindest teilweise der Öffnungsrand 16 eingreift.

Die aneinander anliegenden Anlageschrägen von Öffnungsrand 16 und Kragen 15 sind im wesentlichen planparallel und verlaufen senkrecht zur Längsachse 24.

Der Kragen 15 ist mit seiner Wärmeempfangsfläche 7 in Direktkontakt mit der Kontaktfläche 6 einer Sperrschicht 43 der Heizkörperhülse 11.

Bei Figur 7 ist der Außendurchmesser der Umfangswulst 44 im wesentlichen gleich oder etwas größer als der Innendurchmesser des Öffnungsrandes 16.

Bei dem Ausführungsbeispiel nach Figur 8 fehlt ein Rückhaltevorsprung 44. Statt dessen sind am Kragen 15 zwei in Richtung Längsachse 24 verlaufende Endschrägen 58 ausgebildet, die in der Wärmeempfangsfläche 7 beziehungsweise in der Anlageschräge 17 enden. Die Anlageschräge 17 und die entsprechende Anlageschräge 18 des Öffnungsrandes 16 verlaufen planparallel und senkrecht zur Längsachse 24.

Im Gegensatz zum Ausführungsbeispiel nach Figur 7 ist in der Spitzenhalterung 12 nach Figur 8 auf deren Außenseite eine Kerbe 46 angeordnet, die durch eine in etwa U-förmige Vertiefung der Spitzenhalterung 12 in Richtung Längsachse 24 gebildet ist. Die Vertiefung umrandet die Spitzenhalterung 12 als Vertiefungs- oder Umfangskerbe vollständig.

Ein Abstand 47 der Kerbe 46 von der Öffnung 13 oder dem Öffnungsrand 16 ist größer als ein Abstand 48 von Öffnung 13 und Kontaktfläche 6.

Bei Figur 9 weist der Kragen 15 nur eine Endschräge 58 zwischen der Spitzenhalterung 12 zuweisenden Außenseite des Kragens und der Wärmeempfangsfläche 7 auf. Eine entsprechende Endschräge in Richtung Anlageschräge 17 fehlt. Nach Figur 9 verlaufen Öffnungsrand 13 und auf dessen dem Kragen 15 zuweisenden Unterseite gebildete Anlageschräge 18 schräg nach oben in Richtung Lötspitze 4. Dadurch ist ein Winkel zwischen den Anlageschrägen oder -flächen 17 und 18 gebildet, wobei der Öffnungsrand 18 nur mit einer Außenkante des Kragens 15 in Kontakt ist.

Auch bei Figur 9 ist eine Vertiefungs- oder Umfangskerbe 46 in der Spitzenhalterung 12 ausgebildet. Im Querschnitt ist die Kerbe im wesentlichen U-förmig, wobei ein in Richtung Öffnungsrand 16 verlaufender U-Schenkel unter einem größeren Winkel zur Längsachse 24 als der andere U-Schenkel verläuft, so daß die Kerbe senkrecht zur Längsachse 24 asymmetrisch ausgebildet ist.

In den folgenden Figuren 10 bis 18 sind verschiedene Ausführungsbeispiele für das Schnellwechselsystem 20 dargestellt.

Nach Figur 10 ist das Schnellwechselsystem 20 durch eine Hakenmutter 36 mit entsprechenden Befestigungshaken 21 gebildet, die mit Klemmnuten 37 auf einer Innenseite des Griffabschnitts 19 in Eingriff bringbar sind. Die Hakenmutter 36 ist an der Spitzenhalterung 12 drehbar gelagert.

Bei Figur 11 umfaßt das Schnellwechselsystem 20 eine Rändelmutter 26 mit schraubenförmigem Rastelement 38, welches mit einem entsprechenden Gegenrastelement 39 im Griffabschnitt 19 verrastbar ist. Das Gegenrastelement 39 ist als Rastschieber ausgebildet.

Wiederum kann die Rändelmutter 26 mit Gewinde 38 drehbar oder auch drehfest an der Spitzenhalterung 12 gelagert sein.

Bei Figur 12 ist das Schnellwechselsystem 20 durch eine Rändelmutter 26 gebildet, die auf einen Flansch 25 am Griffabschnitt 19 mit Steilgewinde 28 aufschraubbar ist. Das Steilgewinde kann auch als mehrgängiges Gewinde mit Selbsthemmung ausgeführt sein.

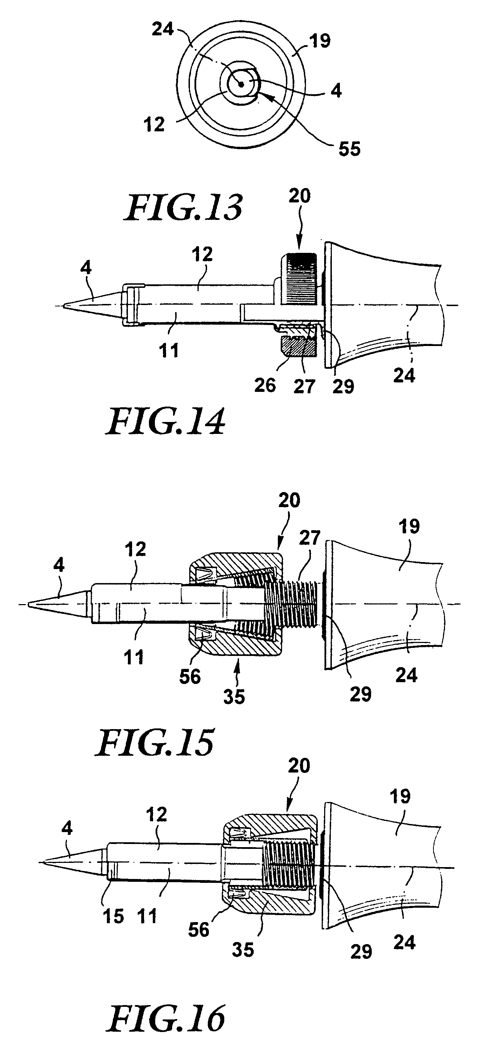

Figur 13 zeigt ein Ausführungsbeispiel einer Spitzenhalterung 12, die einseitig auf ihrer Außenseite eine Seitenöffnung 55 zumindest im Bereich der Lötspitze 4 aufweist.

Nach Figur 14 ist das Schnellwechselsystem 20 durch eine an der Spitzenhalterung 12 gelagerte Rändelmutter 26 und einen am Griffabschnitt 19 vorstehenden Flansch 29 mit Feingewinde 27 gebildet.

Bei dem Ausführungsbeispiel der Figuren 15 und 16 umfaßt das Schnellwechselsystem 20 einen Flansch 29 am Griffabschnitt 19 mit Feingewinde 27 und ein an der Spitzenhalterung 12 gelagertes, zweiteiliges Klappgewinde 35. In Figur 15 sind die beiden Teile des Klappgewindes durch eine Feder 56 auseinander geklappt, so daß die Spitzenhalterung 12 auf den Flansch 29 aufschiebbar ist.

In Figur 16 ist das Klappgewinde an das Feingewinde 27 des Flansches 29 angeklappt und die Spitzenhalterung 12 ist am Griffabschnitt 19 befestigt. Dabei sind Kragen 15 und Heizkörperhülse 11, beziehungsweise die entsprechenden Flächen, siehe obige Ausführungen, miteinander in wärmeleitendem Direktkontakt.

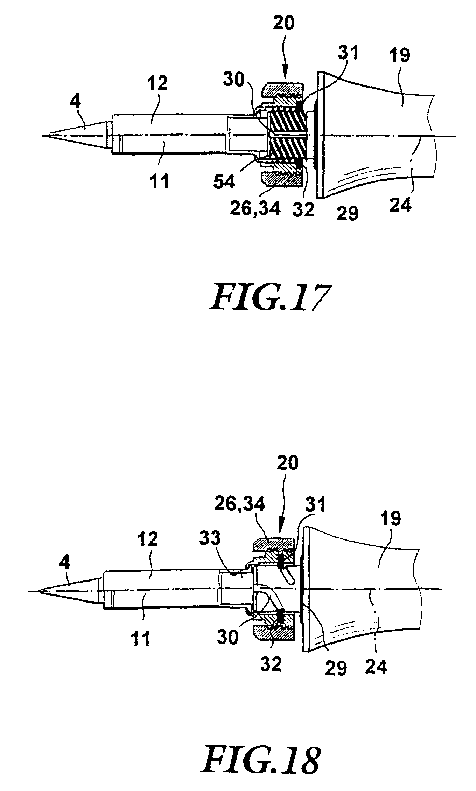

Bei Figur 17 ist das Schnellwechselsystem 20 durch eine Rändelmutter 26 oder einen Ring 34 gebildet, der an der Spitzenhalterung 12 gelagert ist. Weiterhin weist das Schnellwechselsystem 20 einen Flansch 29 mit Steilgewinde und Nut 30 auf, in welche Nut zwei Bolzen 31, 32 auf einer Innenseite der Rändelmutter 26 beziehungsweise des Rings 34 einsetzbar sind.

Bei einem letzten Ausführungsbeispiel des Schnellwechselsystsems 20 weist dieses eine Rändelmutter 26 beziehungsweise einen Ring 34 auf, der an der Spitzenhalterung 12 gelagert ist und einen Flansch 29 am Griffabschnitt 19 mit schrägverlaufenden Nuten 30 auf. In diesen sind Bolzen 31 und 32 geführt, die auf einer Innenseite 33 der Spitzenhalterung 12 beziehungsweise von Rändelmutter 26 beziehungsweise Ring 34 abstehen.

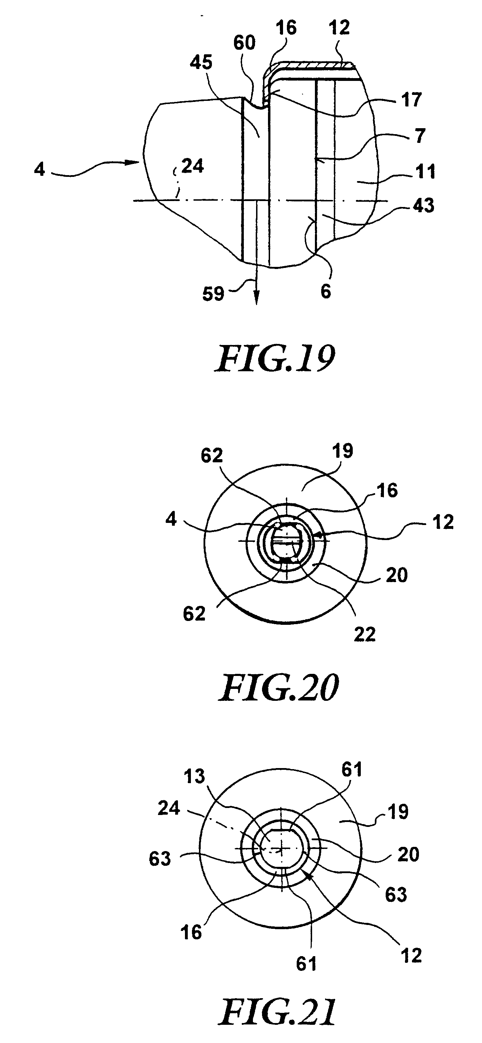

Bei einem fünften Ausführungsbeispiel zur Befestigung einer Lötspitze nach Figur 19, ist eine die Lötspitze 4 umrandende Nut 45 direkt benachbart zum Kragen 15 angeordnet. In die Nut 45 greift der Öffnungsrand 16 der Spitzenhalterung 12 zumindest teilweise ein. Dabei verläuft der Öffnungsrand 16 in radialer Richtung 59 nach innen, wobei die Anlageschräge 17 des Kragens 15 bis zu einem Nutboden 60 der Nut 45 fortgesetzt ist. Der Nutboden 60 ist in diesem Zusammenhang asymmetrisch zur radialen Richtung 59 ausgebildet, das heißt, daß beispielsweise der Nutboden auf Seiten des Kragens 15 in die beim dargestellten Ausführungsbeispiel senkrecht zur Längsachse 24 verlaufende Anlageschräge 17 übergeht. Auf der gegenüberliegenden Seite der Nut 45 verläuft der Nutboden in der Figurenebene nach Figur 19 schräg nach links geneigt bis zur Außenseite der Lötspitze 4.

Die Nut 45 kann ebenfalls mit Abstand zum Kragen 15 angeordnet sein und beispielsweise auch mit einem Öffnungsrand analog zu Figur 9 in zumindest teilweisem Eingriff stehen. Außerdem kann die Nut 45 auch ohne in radialer Richtung 59 über die übrige Lötspitze 4 nach außen vorstehenden Kragen 15 verwendet werden, wobei die Nut direkt zur Befestigung der Lötspitze mittels der Spitzenhalterung 12 an der Heizkörperhülse 11 oder direkt am Heizkörper dient. Weiterhin kann der Öffnungsrand 16 auch mit Spiel in die Nut 45 eingreifen, wobei in diesem Fall die Lötspitze analog zu einem der vorangehenden Ausführungsbeispiele durch die Spitzenhalterung 15 befestigt wird.

In Figur 20 ist eine Vorderansicht einer Lötspitze 4 mit Spitzenhalterung 12 analog zum Ausführungsbeispiel nach Figur 19 dargestellt. Es ist insbesondere erkennbar, daß der Öffnungsrand 16 der Spitzenhalterung 12 mit diametral gegenüberliegenden Einsteckrandabschnitten 61 in entsprechende Nutabschnitte 62 der Nut 45 nach Figur 19 eingreift. Dabei kann die Nut 45 auch nur in diesen Eingriffsbereichen der Einsteckrandabschnitte 61 ausgebildet sein, das heißt, auf die Nutabschnitte 62 beschränkt sein.

Bei dem Ausführungsbeispiel nach Figur 20 sind außerdem Lötspitze 4 und Spitzenhalterung 12 zumindest im Bereich der Nut 45 beziehungsweise des Öffnungsrandes 16 im wesentlichen oval oder elliptisch ausgebildet. Lötspitze 4 und Spitzenhalterung 12 können auch über ihre gesamte Länge oval ausgebildet sein. Die Abmessungen beispielsweise bei elliptisch ausgebildeter Lötspitze 4 und Öffnungsrand 16 sind vorzugsweise so, daß eine große Halbachse der Lötspitze 4 größer als eine kleine Halbachse des Öffnungsrandes 16 und kleiner als eine große Halbachse des Öffnungsrandes 16 ist.

In Figur 21 ist die Vorderansicht nach Figur 20 ohne eingesetzte Lötspitze 4 dargestellt. Es ist insbesondere erkennbar, daß der im wesentlichen ovale Querschnitt der Öffnung 13 der Spitzenhalterung 12 durch zwei Endrundungen 63 gebildet ist, die durch im wesentlichen geradlinige und parallel zueinander verlaufende Einsteckrandabschnitte 61 verbunden sind. Insgesamt weist die Öffnung 13 einen zur Längsachse 24 punktsymmetrischen Querschnitt auf.

Zur Funktion des erfindungsgemäßen Lötkolben sei angemerkt, daß eine verbesserte Wärmeübertragung zwischen Heizkörper und Lötspitze stattfindet, da Kontaktfläche und Wärmeempfangsfläche im direkten und vollflächigen, wärmeübertragenden Direktkontakt stehen. Weiterhin wird durch das Zusammenwirken von Öffnungsrand und Kragen der Lötspitze eine automatische Zentrierung der Lötspitze relativ zum Heizkörper beziehungsweise zur Heizkörperhülse durchgeführt. Der innige Direktkontakt zwischen Wärmeempfangsfläche und Kontaktfläche wird noch dadurch verbessert, daß die Reibung zwischen Öffnungsrand und Kragen größer als zwischen Kontaktfläche und Wärmeempfangsfläche ist. Auf diese Weise wird beim Anbringen der Spitzenhalterung am Griffabschnitt durch die verschiedenen Schnellwechselsysteme die Lötspitze nach erstem Kontakt mit der Heizkörperhülse weiterhin von der Spitzenhalterung mitgenommen, das heißt relativ zur Heizkörperhülse gedreht. Dadurch werden Kontaktfläche und Wärmeempfangsfläche in verbessertem Wärmekontakt gebracht, da die Flächen eingeschliffen und beispielsweise Luftpolster zwischen den Flächen wirksam entfernt werden.

## Patentansprüche

1. Lötkolben (1) mit einem Gehäuse (2) zur Aufnahme wenigstens einer Heizeinrichtung (3) und mit einer am Gehäuse lösbar befestigten Lötspitze (4), wobei die Heizeinrichtung (3) an einer der Lötspitze zuweisenden Stimseite (5) mit einer wärmeübertragenden Kontaktfläche (6) ausgebildet ist, welcher eine Wärmeempfangsfläche (7) der Lötspitze gegenüber liegt, wobei Kontaktflächen (6) und Wärmeempfangsflächen (7) insgesamt planparallel sind und in einem wärmeleitenden, im wesentlichen zwischenschichtlosen Direktkontakt stehen, **dadurch gekennzeichnet, daß** ein Temperatursensor (42) benachbart zur Kontaktfläche (6) und zwischen dieser und einer Heizwicklung (40) eines Heizkörpers (8) angeordnet ist.

2. Lötkolben nach Anspruch 1,
**dadurch gekennzeichnet,**
**daß** Kontaktfläche (6) und Wärmeempfangsfläche (7) achsensymmetrisch zur Längsachse (24) der Lötspitze (4) sind.

3. Lötkolben nach Anspruch 1 oder 2,
**dadurch gekennzeichnet,**
**daß** Kontaktfläche (6) und Wärmeempfangsfläche (7) relativ zueinander verdrehbar sind.

4. Lötkolben nach wenigstens einem der vorangehenden Ansprüche,
**dadurch gekennzeichnet,**
**daß** Kontaktfläche (6) und Wärmeempfangsfläche (7) kreisförmig, insbesondere mit gleichem Radius, sind.

5. Lötkolben nach wenigstens einem der vorangehenden Ansprüche,
**dadurch gekennzeichnet,**
**daß** die Wärmeempfangsfläche (7) gleich oder größer als die Kontaktfläche (6) ist.

6. Lötkolben nach wenigstens einem der vorangehenden Ansprüche,
**dadurch gekennzeichnet,**
**daß** die Heizeinrichtung (3) ein elektrisch erwärmbarer Heizkörper (8) ist.

7. Lötkolben nach wenigstens einem der vorangehenden Ansprüche,
**dadurch gekennzeichnet,**
**daß** zumindest die Kontaktfläche (6) aus einem Material (9) zur Optimierung des Wärmeübergangs gebildet ist.

8. Lötkolben nach wenigstens einem der vorangehenden Ansprüche,
**dadurch gekennzeichnet,**
**daß** die Heizeinrichtung (3) einen elektrisch erwärmbaren Heizkörper (8) aufweist, der mit seinem der Lötspitze (4) zuweisenden Endabschnitt (10) in einer Heizkörperhülse (11) aus einem Material (9) zur Optimierung des Wärmeübergangs, wie zum Beispiel Silber, eingesteckt ist.

9. Lötkolben nach wenigstens einem der vorangehenden Ansprüche,
**dadurch gekennzeichnet,**
**daß** das Gehäuse (2) eine lösbar am übrigen Gehäuse befestigte Spitzenhalterung (12) umfaßt, welche insbesondere hülsenförmig ist und in welcher die Heizeinrichtung (3) zumindest mit einem Endabschnitt angeordnet ist, wobei am freien Ende (14) der Spitzenhalterung (12) die Lötspitze (4) lösbar befestigt ist.

10. Lötkolben nach wenigstens einem der vorangehenden Ansprüche,
**dadurch gekennzeichnet,**
**daß** die Spitzenhalterung (12) an ihrem freien Ende (14) eine Öffnung (13) zum Hervorstehen der Lötspitze (4) aufweist, wobei die Lötspitze (4) an ihrem der Heizeinrichtung (3) zuweisenden Ende einen zumindest teilweise umlaufenden Kragen (15) aufweist, der einen Öffnungsrand (16) der Öffnung (13) hintergreift.

11. Lötkolben nach wenigstens einem der vorangehenden Ansprüche,
**dadurch gekennzeichnet,**
**daß** zur spielfreien Anlage von Öffnungsrand (16) und Kragen (15) diese einander zuweisende und miteinander in Anlage stehender Anlageschrägen (17, 18) aufweisen.

12. Lötkolben nach wenigstens einem der vorangehenden Ansprüche,
**dadurch gekennzeichnet,**
**daß** der Öffnungsrand (16) radial einwärts in Richtung Längsachse (24) verläuft.

13. Lötkolben nach wenigstens einem der vorangehenden Ansprüche,
**dadurch gekennzeichnet,**
**daß** sich Öffnungsrand (16) und Anlagefläche (17) des Kragens (15) im wesentlichen senkrecht zur Längsachse (24) erstrecken.

14. Lötkolben nach wenigstens einem der vorangehenden Ansprüche,
**dadurch gekennzeichnet,**
**daß** ein Rückhaltevorsprung (44) zumindest stellenweise radial nach außen von der Lötspitze (4) und beabstandet vom Kragen (15) absteht.

15. Lötkolben nach wenigstens einem der vorangehenden Ansprüche,
**dadurch gekennzeichnet,**
**daß** der Rückhaltevorsprung (44) als die Lötspitze (4) umlaufende Ringwulst ausgebildet ist.

16. Lötkolben nach wenigstens einem der vorangehenden Ansprüche,
**dadurch gekennzeichnet,**
**daß** zwischen Rückhaltevorsprung (44) und Kragen (15) eine Nut (45) zur zumindest teilweisen Aufnahme des Öffnungsrandes (16) ausgebildet ist.

17. Lötkolben nach wenigstens einem der vorangehenden Ansprüche,
**dadurch gekennzeichnet,**
**daß** eine Nut (45) in Richtung Vorderende (22) der Lötspitze (4) beabstandet zum Kragen (15) in der Lötspitze ausgebildet ist, in welche Nut (45) der Öffnungsrand (16) der Spitzenhalterung (12) wenigstens stellenweise eingreift.

18. Lötkolben nach wenigstens einem der vorangehenden Ansprüche,
**dadurch gekennzeichnet,**
**daß** die Nut (45) zumindest auf gegenüberliegenden Seiten der Lötspitze (4) angeordnet ist.

19. Lötkolben nach wenigstens einem der vorangehenden Ansprüche,
**dadurch gekennzeichnet,**
**daß** Lötspitze (4) und/oder Spitzenhalterung (12) zumindest im Bereich von Nut (45) und/oder Öffnungsrand (16) einen im wesentlichen ovalen oder elliptischen Querschnitt aufweisen.

20. Lötkolben nach wenigstens einem der vorangehenden Ansprüche,
**dadurch gekennzeichnet,**
**daß** die Nut (45) einen zur radialen Richtung (59) asymmetrischen Querschnitt aufweist.

21. Lötkolben nach wenigstens einem der vorangehenden Ansprüche,
**dadurch gekennzeichnet,**
**daß** beabstandet zur Öffnung (13) der Spitzenhalterung (12) in dieser eine im wesentlichen senkrecht zur Längsachse (24) verlaufende Kerbe (46) ausgebildet ist.

22. Lötkolben nach wenigstens einem der vorangehenden Ansprüche,
**dadurch gekennzeichnet,**
**daß** die Kerbe (46) als in Richtung Längsachse (24) nach innen versetzte Vertiefungskerbe ausgebildet ist.

23. Lötkolben nach wenigstens einem der vorangehenden Ansprüche,
**dadurch gekennzeichnet,**
**daß** die Vertiefungskerbe (46) als die Spitzenhalterung (12) umlaufende Umfangskerbe ausgebildet ist.

24. Lötkolben nach wenigstens einem der vorangehenden Ansprüche,
**dadurch gekennzeichnet,**
**daß** der Abstand (47) der Kerbe (46) von der Öffnung (13) zumindest gleich dem Abstand (48) zwischen Kontaktfläche (6) und Öffnung (13) ist.

25. Lötkolben nach wenigstens einem der vorangehenden Ansprüche,
**dadurch gekennzeichnet,**
**daß** ein Reibschluß zwischen Öffnungsrand (16) und Kragen (15) größer als zwischen Kontaktfläche (6) und Wärmeempfangsfläche (7) ist.

26. Lötkolben nach wenigstens einem der vorangehenden Ansprüche,
**dadurch gekennzeichnet,**
**daß** der Heizeinrichtung (3) ein weiterer Temperatursensor zur Regelung der Temperatur zugeordnet ist.

27. Lötkolben nach wenigstens einem der vorangehenden Ansprüche,
**dadurch gekennzeichnet,**
**daß** zur lösbaren Befestigung der Spitzenhalterung (12) an einem Griffabschnitt (19) des Gehäuses (2) ein Schnellwechselsystem (20) zwischen diesen ausgebildet ist.

28. Lötkolben nach wenigstens einem der vorangehenden Ansprüche,
**dadurch gekennzeichnet,**
**daß** das Schnellwechselsystem (20) einen Gewindeflansch (25) am Griffabschnitt (19) und eine an der Spitzenhalterung (12) drehbar gelagerte Rändelmutter (26) aufweist.

29. Lötkolben nach wenigstens einem der vorangehenden Ansprüche,
**dadurch gekennzeichnet,**
**daß** das Schnellwechselsystem (20) einen Flansch (29) mit schräger Nut (30) am Griffabschnitt (19) und wenigstens einen entlang der Nut (30) führbaren Bolzen (31, 32) in der Spitzenhalterung (12) aufweist.

30. Lötkolben nach wenigstens einem der vorangehenden Ansprüche,
**dadurch gekennzeichnet,**
**daß** der Bolzen (31, 32) von der Innenseite (33) eines an einem Ende der Spitzenhalterung (12) drehbar gelagerten Ring (34) absteht.

31. Lötkolben nach wenigstens einem der vorangehenden Ansprüche,
**dadurch gekennzeichnet,**
**daß** das Schnellwechselsystem (20) einen Gewindeflansch (25) am Griffabschnitt (19) und ein Klappgewinde (35) an der Spitzenhalterung (12) aufweist.

32. Lötkolben nach wenigstens einem der vorangehenden Ansprüche,
**dadurch gekennzeichnet,**
**daß** das Klappgewinde (35) zweiteilig und in Richtung Aufklappstellung federbeaufschlagt ist.

33. Lötkolben nach wenigstens einem der vorangehenden Ansprüche,
**dadurch gekennzeichnet,**
**daß** die Spitzenhalterung (12) zumindest benachbart zu ihrem freien Ende einseitig offen ist.

34. Lötkolben nach wenigstens einem der vorangehenden Ansprüche,
**dadurch gekennzeichnet,**
**daß** das Schnellwechselsystem (20) eine Hakenmutter (36) an der Spitzenhalterung (12) und eine schräg verlaufende Klemmnut (37) im Griffabschnitt (19) aufweist.

35. Lötkolben nach wenigstens einem der vorangehenden Ansprüche,
**dadurch gekennzeichnet,**
**daß** das Schnellwechselsystem (20) ein Rastelement (38) an der Spitzenhalterung (12) und ein Gegenrastelement (39) am Griffabschnitt (19) aufweist.

36. Lötkolben nach wenigstens einem der vorangehenden Ansprüche,
**dadurch gekennzeichnet,**
**daß** das Rastelement (38) als Verzahnung und das Gegenrastelement (39) als Rastschieber ausgebildet sind.

37. Lötkolben nach wenigstens einem der vorangehenden Ansprüche,
**dadurch gekennzeichnet,**
**daß** ein Gewinde (28) des Gewindeflansches (25) insbesondere als Steilgewinde und/oder mehrgängiges Gewinde ausgebildet ist.

38. Lötkolben nach wenigstens einem der vorangehenden Ansprüche,
**dadurch gekennzeichnet,**
**daß** eine in Richtung Lötspitze (4) konisch erweiterte Grifftulpe (49) vom Griffabschnitt (19) absteht und die Spitzenhalterung (12) zumindest teilweise umgibt.

39. Lötkolben nach wenigstens einem der vorangehenden Ansprüche,
**dadurch gekennzeichnet,**
**daß** die Grifftulpe (49) an der Spitzenhalterung (12) gelagert ist und zwischen dem Griffabschnitt (19) zuweisenden Ende (50) der Grifftulpe (49) und dem Griffabschnitt ein Schnellwechselsystem (20) ausgebildet ist.

40. Lötkolben nach wenigstens einem der vorangehenden Ansprüche,
**dadurch gekennzeichnet,**
**daß** der Heizkörper (8) eine insbesondere auf einen Wickelträger (41) aufgewickelte Heizwicklung (40) enthält.

41. Lötkolben nach wenigstens einem der vorangehenden Ansprüche,
**dadurch gekennzeichnet,**
**daß** der Heizkörper aus Keramik ist und ein Temperatursensor (42) im Heizkörper (8) keramisiert ist.

42. Lötkolben nach wenigstens einem der vorangehenden Ansprüche,
**dadurch gekennzeichnet,**
**daß** Wärmeempfangsfläche (7) und/oder Kontaktfläche (6) von einer metallischen Sperrschicht (43), insbesondere aus Chrom oder Nickel, gebildet sind.

43. Lötkolben nach wenigstens einem der vorangehenden Ansprüche,
**dadurch gekennzeichnet,**
**daß** Flächennormalen von Kontaktfläche (6) und Wärmeempfangsfläche (7) parallel zur Längsachse (24) der Lötspitze (4) beziehungsweise der Spitzenhalterung (12) sind.

## Claims

1. A soldering iron (1) comprising a housing (2) for accommodating therein at least one heating means (3), and a soldering bit (4) which is releasably secured to said housing, said heating means (3) including a heat-transmitting contact surface (6) provided on an end face (5) thereof which faces the soldering bit, and a heat reception surface (7) of said soldering bit being located opposite said contact surface (6), said contact surface (6) and said heat reception surface (7) being plane-parallel throughout the whole area thereof and a heat-conducting, essentially intermediate-layer-less direct contact existing between said contact surface (6) and said heat reception surface (7),
**characterized in that** a temperature sensor (42) is arranged adjacent the contact surface (6) and between said contact surface (6) and a filament winding (40) of a heating element (8).

2. A soldering iron according to claim 1,
**characterized in that**
the contact surface (6) and the heat reception surface (7) are axially symmetrical with respect to the longitudinal axis (24) of the soldering bit (4).

3. A soldering iron according to claim 1 or 2,
**characterized in that**
the contact surface (6) and the heat reception surface (7) are adapted to be rotated relative to one another.

4. A soldering iron according to at least one of the preceding claims,
**characterized in that**
the contact surface (6) and the heat reception surface (7) are circular, especially with the same radius.

5. A soldering iron according to at least one of the preceding claims,
**characterized in that**
the heat reception surface (7) has the same size as or a larger size than the contact surface (6).

6. A soldering iron according to at least one of the preceding claims,
**characterized in that**
the heating means (3) is an electrically heatable heating element (8).

7. A soldering iron according to at least one of the preceding claims,
**characterized in that**
at least the contact surface (6) consists of a material (9) for optimizing the transfer of heat.

8. A soldering iron according to at least one of the preceding claims,
**characterized in that**
the heating means (3) comprises an electrically heatable heating element (8) whose end portion (10), which faces the soldering bit (4), is inserted in a heating element sleeve (11) consisting of a material (9), e.g. silver, for optimizing the transfer of heat.

9. A soldering iron according to at least one of the preceding claims,
**characterized in that**
the housing (2) comprises a bit holder (12) which is releasably secured to the rest of the housing and which has especially the shape of a sleeve, at least an end portion of the heating means (3) being arranged in said bit holder (12), the soldering bit (4) being releasably secured to the free end (14) of said bit holder (12).

10. A soldering iron according to at least one of the preceding claims,
**characterized in that**
the free end (14) of said bit holder (12) is provided with an opening (13) through which the soldering bit (4) projects, the end of the soldering bit (4) facing the heating means (3) being provided with an at least partially circumferentially extending collar (15) engaging behind an opening edge (16) of said opening (13).

11. A soldering iron according to at least one of the preceding claims,
**characterized in that**
the opening edge (16) and the collar (15) are provided with contact bevels (17, 18) which face one another and which abut on one another so as to provide a backlash-free contact between said opening edge (16) and said collar (15).

12. A soldering iron according to at least one of the preceding claims,
**characterized in that**
the opening edge (16) extends radially inwards in the direction of the longitudinal axis (24).

13. A soldering iron according to at least one of the preceding claims,
**characterized in that**
the opening edge (16) and the contact bevel (17) of the collar (15) extend substantially at right angles to the longitudinal axis (24).

14. A soldering iron according to at least one of the preceding claims,
**characterized in that**
a retaining projection (44) projects radially outwards beyond the soldering bit (4) at least at certain locations and that said retaining projection (44) extends in spaced relationship with the collar (15).

15. A soldering iron according to at least one of the preceding claims,
**characterized in that**
the retaining projection (44) is an annular bead extending around the soldering bit (4).

16. A soldering iron according to at least one of the preceding claims,
**characterized in that**
a groove (45) is formed between said retaining projection (44) and said collar (15), said groove (45) being used for receiving therein at least part of the opening edge (16).

17. A soldering iron according to at least one of the preceding claims,
**characterized in that** a groove (45) is formed in the soldering bit (4) in the direction of the front end (22) of said soldering bit in spaced relationship with the collar (15), the opening edge (16) of the bit holder (12) engaging said groove (45) at least at certain locations.

18. A soldering iron according to at least one of the preceding claims,
**characterized in that**
the groove (45) is arranged at least on opposite sides of the soldering bit (4).

19. A soldering iron according to at least one of the preceding claims,
**characterized in that**
the soldering bit (4) and/or the bit holder (12) have an essentially oval or elliptical cross-section at least in the area of the groove (45) and/or of the opening edge (16).

20. A soldering iron according to at least one of the preceding claims,
**characterized in that**
the groove (45) has an asymmetrical cross-section with respect to the radial direction (59).

21. A soldering iron according to at least one of the preceding claims,
**characterized in that**
the bit holder (12) is provided with a notch (46), which is arranged in spaced relationship with the opening (13) of said bit holder (12) and which extends essentially at right angles to the longitudinal axis (24).

22. A soldering iron according to at least one of the preceding claims,
**characterized in that**
the notch (46) is implemented as a depressed notch which is displaced inwardly in the direction of the longitudinal axis (24).

23. A soldering iron according to at least one of the preceding claims,
**characterized in that**
the depressed notch (46) is implemented as a circumferential notch extending around the bit holder (12).

24. A soldering iron according to at least one of the preceding claims,
**characterized in that**
the distance (47) between the notch (46) and the opening (13) is at least equal to the distance (48) between the contact surface (6) and the opening (13).

25. A soldering iron according to at least one of the preceding claims,
**characterized in that**
the frictional engagement existing between the opening edge (16) and the collar (15) is stronger than that existing between the contact surface (6) and the heat reception surface (7).

26. A soldering iron according to at least one of the preceding claims,
**characterized in that**
the heating means (3) has associated therewith a further temperature sensor for controlling the temperature.

27. A soldering iron according to at least one of the preceding claims,
**characterized in that**
a quick-change system (20) is provided between the bit holder (12) and a handle section (19) of the housing (2) so as to releasably secure said bit holder (12) to said handle section (19).

28. A soldering iron according to at least one of the preceding claims,
**characterized in that**
said quick-change system (20) comprises a threaded flange (25) attached to said handle section (19), and a knurled nut (26) rotatably supported on said bit holder (12).

29. A soldering iron according to at least one of the preceding claims,
**characterized in that**
said quick-change system (20) comprises a flange (29) attached to said handle section (19) and provided with an oblique groove (30), and at least one bolt (31, 32) provided in the bit holder (12) and adapted to be guided along said groove (30).

30. A soldering iron according to at least one of the preceding claims,
**characterized in that**
said bolt (31, 32) projects on the inner side (33) of a ring (34) rotatably supported on one end of the bit holder (12).

31. A soldering iron according to at least one of the preceding claims,
**characterized in that**
the quick-change system (20) comprises a threaded flange (25) attached to the handle section (19), and a snap-to thread (35) provided on the bit holder (12).

32. A soldering iron according to at least one of the preceding claims,
**characterized in that**
said snap-to thread (35) consists of two parts and is spring-loaded in the direction of its open position.

33. A soldering iron according to at least one of the preceding claims,
**characterized in that**
the bit holder (12) is open on one side thereof at least adjacent its free end.

34. A soldering iron according to at least one of the preceding claims,
**characterized in that**
the quick-change system (20) comprises a hook nut (36) on the bit holder (12) and an obliquely extending clamping nut (37) in the handle section (19).

35. A soldering iron according to at least one of the preceding claims,
**characterized in that**
the quick-change system (20) comprises a locking element (38) on the bit holder (12) and a counterlocking element (39) on the handle section (19).

36. A soldering iron according to at least one of the preceding claims,
**characterized in that**
the locking element (38) consists of teeth and that the counterlocking element (39) consists of a locking slide member.

37. A soldering iron according to at least one of the preceding claims,
**characterized in that**
a thread (28) of the threaded flange (25) is implemented especially as a coarse-pitch thread and/or as a multiple thread.

38. A soldering iron according to at least one of the preceding claims,
**characterized in that**
a tulip-shaped handle portion (49), which is conically enlarged in the direction of the soldering bit (4), projects from the handle section (19) and surrounds the bit holder (12) at least partially.

39. A soldering iron according to at least one of the preceding claims,
**characterized in that**
the tulip-shaped handle portion (49) is supported on said bit holder (12) and that a quick-change system (20) is provided between the end (50) of said tulip-shaped handle portion (49) which faces the handle section (19) and said handle section (19).

40. A soldering iron according to at least one of the preceding claims,
**characterized in that**
the heating element (8) comprises a filament winding (40), especially a filament winding that is wound onto a winding carrier (41).

41. A soldering iron according to at least one of the preceding claims,
**characterized in that**
the heating element consists of ceramic and that a temperature sensor (42) is embedded in ceramic material in said heating element (8).

42. A soldering iron according to at least one of the preceding claims,
**characterized in that**
the heat reception surface (7) and/or the contact surface (6) are formed by a metallic blocking layer (43) consisting especially of chromium or nickel.

43. A soldering iron according to at least one of the preceding claims,
**characterized in that**
the normal lines to the contact surface (6) and to the heat reception surface (7) extend parallel to the longitudinal axis (24) of the soldering bit (4) and of the bit holder (12), respectively.

## Revendications

1. Fer à souder (1) comprenant une carcasse (2) destinée à contenir au moins un dispositif de chauffage (3) et une pointe de soudage (4) fixée à la carcasse de façon démontable, le dispositif de chauffage (3) étant muni sur un côté frontal (5) pointant vers la pointe de soudage, d'une surface de contact (6) qui transmet la chaleur, en face de laquelle se trouve une surface (7) de réception de la chaleur de la pointe de soudage, les surfaces de contact (6) et les surfaces (7) de réception de la chaleur étant dans leur ensemble situées dans des plans parallèles et se trouvant en contact direct de transmission de la chaleur, sensiblement sans couche intermédiaire, **caractérisé en ce qu'**un capteur de température (42) est disposé adjacent à la surface de contact( 6) et entre cette surface et un enroulement chauffant (40) du carcasse chauffant (8).

2. Fer à souder selon la revendication 1,
**caractérisé**
**en ce que** la surface de contact (6) et la surface (7) de réception de la chaleur sont symétriques par rapport à l'axe longitudinal (24) de la pointe de soudage (4).

3. Fer à souder selon la revendication 1 ou 2,
**caractérisé**
**en ce que** la surface de contact (6) et la surface (7) de réception de la chaleur peuvent tourner l'une par rapport à l'autre.

4. Fer à souder selon au moins une des revendications précédentes,
**caractérisé**
**en ce que** la surface de contact (6) et la surface (7) de réception de la chaleur sont circulaires, en particulier de même rayon.

5. Fer à souder selon au moins une des revendications précédentes,
**caractérisé**
**en ce que** la surface (7) de réception de la chaleur est de même dimension ou plus grande que la surface de contact( 6).

6. Fer à souder selon au moins une des revendications précédentes,
**caractérisé**
**en ce que** le dispositif de chauffage (3) est une carcasse de chauffe (8) pouvant être chauffé électriquement.

7. Fer à souder selon au moins une des revendications précédentes,
**caractérisé**
**en ce qu'**au moins la surface de contact (6) est faite d'une matière (9) destinée à optimiser la transmission de la chaleur.

8. Fer à souder selon au moins une des revendications précédentes,
**caractérisé**
**en ce que** le dispositif de chauffage (3) présente une carcasse de chauffe (8) pouvant être chauffé électriquement dont le segment terminal (10) pointant vers la pointe de soudage (4) est inséré dans une douille (11) du carcasse de chauffe faite d'une matière (9) destinée à optimiser la transmission de la chaleur comme, par exemple, de l'argent.

9. Fer à souder selon au moins une des revendications précédentes,
**caractérisé**
**en ce que** la carcasse (2) comprend une monture de pointe (12) fixée au reste de la carcasse de façon démontable, qui est en particulier en forme de douille et dans laquelle le dispositif de chauffage (3) est disposé au moins par un segment terminal, la pointe de soudage (4) étant fixée de façon démontable à l'extrémité libre (14) de la monture de pointe (12).

10. Fer à souder selon au moins une des revendications précédentes,
**caractérisé**
**en ce que** la monture de pointe (12) présente à son extrémité libre (14) une ouverture (13) pour laisser déborder la pointe de soudage (4), la pointe de soudage (4) présentant, à son extrémité pointant vers le dispositif de chauffage (3) une collerette (15) qui l'entoure au moins partiellement et qui est accrochée derrière un bord (16) de l'ouverture (13).

11. Fer à souder selon au moins une des revendications précédentes,
**caractérisé**
**en ce que** pour assurer un appui sans jeu du bord (16) de l'ouverture et de la collerette (15), ces éléments présentent des chanfreins d'appui (17, 18) dirigés l'un vers l'autre et en contact entre eux.

12. Fer à souder selon au moins une des revendications précédentes,
**caractérisé**
**en ce que** le bord (16) de l'ouverture s'étend radialement vers l'intérieur en direction de l'axe longitudinal (24).

13. Fer à souder selon au moins une des revendications précédentes,
**caractérisé**
**en ce que** le bord (16) de l'ouverture et la surface de contact (17) de la collerette (15) s'étendent pratiquement perpendiculairement à l'axe longitudinal (24).

14. Fer à souder selon au moins une des revendications précédentes.
**caractérisé**
**en ce qu'**une protubérance de retenue (44) fait saillie radialement vers l'extérieur sur la pointe de soudage (4), au moins par endroits et à distance de la collerette (15).

15. Fer à souder selon au moins une des revendications précédentes,
**caractérisé**
**en ce que** la protubérance de retenue (44) est constituée par un bourrelet annulaire qui entoure la pointe de soudage (4).

16. Fer à souder selon au moins une des revendications précédentes,
**caractérisé**
**en ce qu'**une gorge (45) est formée entre la protubérance de retenue (44) et la collerette (15) pour recevoir au moins partiellement le bord (16) de l'ouverture

17. Fer à souder selon au moins une des revendications précédentes,
**caractérisé**
**en ce qu'**une gorge (45) est formée dans la pointe de soudage en direction de l'extrémité avant (22) de la pointe de soudage (4), à distance de la collerette (15), dans laquelle gorge (45) le bord (16) de l'ouverture de la monture (12) de la pointe est engagé, au moins par endroits.

18. Fer à souder selon au moins une des revendications précédentes,
**caractérisé**
**en ce que** la gorge (45) est prévue au moins sur des côtés opposés de la pointe de soudage (4).

19. Fer à souder selon au moins une des revendications précédentes,
**caractérisé**
**en ce que** la pointe de soudage (4) et/ou la monture (12) de la pointe présentent, du moins dans la région de la gorge (45) et/ou du bord (16) de l'ouverture, une section pratiquement ovale ou elliptique.

20. Fer à souder selon au moins une des revendications précédentes,
**caractérisé**
**en ce que** la gorge (45) présente une section asymétrique par rapport à la direction radiale (59).

21. Fer à souder selon au moins une des revendications précédentes,
**caractérisé**
**en ce qu'**à distance de l'ouverture (13) de la monture (12) de la pointe est formée une encoche (46) qui s'étend dans cette monture, pratiquement perpendiculairement à l'axe longitudinal (24).

22. Fer à souder selon au moins une des revendications précédentes,
**caractérisé**
**en ce que** l'encoche (46) est constituée par une encoche d'approfondissement déportée vers l'intérieur en direction de l'axe longitudinal (24).

23. Fer à souder selon au moins une des revendications précédentes,
**caractérisé**
**en ce que** l'encoche d'approfondissement (46) est constituée par une encoche périphérique qui entoure la monture (12) de la pointe.

24. Fer à souder selon au moins une des revendications précédentes,
**caractérisé**
**en ce que** la distance (47) séparant l'encoche (46) de l'ouverture (13) est au moins égale à la distance (48) entre la surface de contact (6) et l'ouverture (13).

25. Fer à souder selon au moins une des revendications précédentes,
**caractérisé**
**en ce qu'**une liaison par friction entre le bord (16) de l'ouverture et la collerette (15) est plus grande qu'entre la surface de contact (6) et la surface (7) de réception de la chaleur.

26. Fer à souder selon au moins une des revendications précédentes,
**caractérisé**
**en ce qu'**un capteur de température supplémentaire est associé au dispositif de chauffage (3) pour la régulation de la température.

27. Fer à souder selon au moins une des revendications précédentes,
**caractérisé**
**en ce que** pour assurer la fixation démontable de la monture (12) de la pointe à une partie formant poignée (19) de la carcasse (2), un système de changement rapide (20) est disposé entre ces éléments.

28. Fer à souder selon au moins une des revendications précédentes,
**caractérisé**
**en ce que** le système de changement rapide (20) présente un collet fileté (25) sur la partie formant poignée (19) et un écrou moleté (26) monté rotatif sur la monture (12) de la pointe.

29. Fer à souder selon au moins une des revendications précédentes,
**caractérisé**
**en ce que** le système de changement rapide (20) présente une collerette (29) munie d'une gorge oblique (30) prévue sur la partie formant poignée (19) et au moins un ergot (31, 32) prévu dans la monture (12) de la pointe, et qui peut coulisser le long de la gorge (30).

30. Fer à souder selon au moins une des revendications précédentes,
**caractérisé**
**en ce que** l'ergot (31, 32) fait saillie sur le côté intérieur (33) d'une bague (34) montée rotative à une extrémité de la monture (12) de la pointe.

31. Fer à souder selon au moins une des revendications précédentes,
**caractérisé**
**en ce que** le système de changement rapide (20) présente une collerette filetée (25) portée par la partie formant poignée (19) et un filetage à enclenchement (35) sur la monture (12) de la pointe.

32. Fer à souder selon au moins une des revendications précédentes,
**caractérisé**
**en ce que** le filetage à enclenchement (35) est en deux parties et sollicité élastiquement en direction de la position d'enclenchement.

33. Fer à souder selon au moins une des revendications précédentes,
**caractérisé**
**en ce que** la monture (12) de la pointe est ouverte au, moins d'un côté dans la région adjacente à son extrémité libre.

34. Fer à souder selon au moins une des revendications précédentes,
**caractérisé**
**en ce que** le système à changement rapide (20) présente un écrou à accrochage (36) sur la monture (12) de la pointe et une gorge de serrage (37) s'étendant obliquement dans la partie formant poignée (19).

35. Fer à souder selon au moins une des revendications précédentes,
**caractérisé**
**en ce que** le système de changement rapide (20) présente un élément d'arrêt (38) sur la monture (12) de la pointe et un contre-élément d'arrêt (39) sur la partie formant poignée (19).

36. Fer à souder selon au moins une des revendications précédentes,
**caractérisé**
**en ce que** l'élément d'arrêt (38) est constitué par une denture et le contre élément d'arrêt (39) par un coulisseau d'arrêt.

37. Fer à souder selon au moins une des revendications précédentes,
**caractérisé**
**en ce qu'**un filetage (28) de la collerette filetée (25) est constituée en particulier par un filetage à grand pas et/ou par un filetage à plusieurs entrées.

38. Fer à souder selon au moins une des revendications précédentes,
**caractérisé**
**en ce qu'**une tulipe de poignée (49) qui s'élargit avec une forme conique en direction de la pointe de soudage (4) fait saillie sur la partie formant poignée (19) et entoure au moins partiellement la monture (12) de la pointe.

39. Fer à souder selon au moins une des revendications précédentes,
**caractérisé**
**en ce que** la tulipe de poignée (49) est montée sur la monture (12) de la pointe et un système de changement rapide (20) est formé entre l'extrémité (50) de la tulipe de poignée (49) qui pointe vers la partie formant poignée (19) et la partie formant poignée.

40. Fer à souder selon au moins une des revendications précédentes.
**caractérisé**
**en ce que** la carcasse de chauffe (8) renferme un enroulement chauffant (40) enroulé en particulier sur un support d'enroulement (41).

41. Fer à souder selon au moins une des revendications précédentes,
**caractérisé**
**en ce que** la carcasse de chauffe est en céramique et un capteur de température (42) est incorporé dans la carcasse de chauffe (8) par formation d'une céramique.

42. Fer à souder selon au moins une des revendications précédentes,
**caractérisé**
**en ce que** la surface (7) de réception de la chaleur et/ou la surface de contact (6) sont formées d'une couche d'arrêt métallique (43), en particulier de chrome ou de nickel.

43. Fer à souder selon au moins une des revendications précédentes,
**caractérisé**
**en ce que** la normale à la surface de contact (6) et la normale à la surface (7) de réception de la chaleur sont parallèles à l'axe longitudinal (24) de la pointe de soudage (4) ou de la monture (12) de la pointe.
